# EUROPEAN PATENT SPECIFICATION

(11) **EP 2 548 772 B1**
(45) Date of publication and mention of the grant of the patent: **05.03.2014**
(21) Application number: 11174725.9
(22) Date of filing: 20.07.2011
(51) Int. Cl.: B60R 21/36

(54) **An airbag arrangement**
Airbaganordnung
Agencement d'airbag

(43) Date of publication of application: 23.01.2013
(73) Proprietor: Autoliv Development AB, 447 83 Vårgårda (SE)
(72) Inventor: Reiter, Thomas, 85256 Vierkirchen (DE); Ewert, Jochen, 85221 Dachau (DE); Erixon, Rikard, 44145 Alingsås (SE)
(74) Representative: Parry, Simon James

(56) References cited:
- EP-A2- 1 342 630
- EP-B1- 1 693 256
- DE-A1- 3 618 060
- DE-A1- 10 138 449
- JP-A- 2004 338 554
- JP-A- 2006 219 046
- US-A1- 2007 222 189
- US-B1- 6 254 130

## Description

The present invention relates to an airbag arrangement. More particularly, the invention relates to a pedestrian airbag arrangement for a motor vehicle.

When a motor vehicle is involved in a frontal impact with a pedestrian, it is common for the body of the pedestrian to strike the windscreen of the vehicle which can result in serious injury to the pedestrian, and significant damage to the vehicle.

In an attempt to alleviate this, it has been proposed to provide a motor vehicle with a socalled pedestrian airbag which, if vehicle sensors indicate that a collision with a pedestrian is occurring or is likely to occur, inflates to cover a central portion of the windscreen, and/or the left and right A-pillars of the vehicle. Typically, an airbag of this general type is provided in an initially tightly folded and/or rolled package and is stored beneath a rear part of the vehicle's hood or bonnet, or beneath a cowl which is provided between the base of the windscreen and the rear part of the hood or bonnet. However in some arrangements it is considered preferable to mount the pedestrian airbag module inside a cavity formed in the hood or bonnet itself. The rear of the hood or bonnet may be lifted, by a suitable air-bag, piston or other arrangement, to allow sufficient space for the pedestrian airbag to inflate so that it deploys in a manner effective to cover at least part of the windscreen and/or A-pillars of the vehicle, thereby cushioning the impact of a pedestrian with these parts of the vehicle.

The aim of a pedestrian airbag of this type is to provide an inflated cushion over the windscreen and/or A-pillars of the vehicle, thus cushioning the impact of a pedestrian with these parts of the vehicle.

One potential problem that can occur with the use of airbags of this type is that, once the airbag has been inflated, it is very difficult for the driver of the vehicle to see out of the front windscreen. If the vehicle collides with a pedestrian with sufficient force that the pedestrian airbag is actuated, the vehicle is likely to be travelling at considerable speed. If a pedestrian airbag inflates while the vehicle is driving at speed, and subsequently obscures the driver's view, the result may be that the driver fails to see and avoid further objects or hazards before bringing the vehicle to a complete stop.

One solution to this problem is presented in JP2006219046. This document discloses a pedestrian airbag which has a pair of straps which are attached to the upper left and right hand corners of the airbag, and which extend outside the inflatable volume of the airbag. As the airbag inflates, the straps are drawn out from a spring-biased reel, with the biasing force being overcome by the inflation of the airbag cushion itself. Once the airbag has been inflated however, the reel rotates to retract the straps, thereby drawing the deflating airbag off the windscreen and allowing the driver to see clearly out of the windscreen once more.

JP2004-338554A discloses a pedestrian airbag that deploys from the front bumper of a vehicle. An arrangement is disclosed in which three separate internal tethers are attached to the internal surface of an airbag. Each tether is attached to the airbag at a single point and the lengths of the tethers can be altered by actuation of individual winches located within the housing of the airbag arrangement.

It is an object of the present invention to provide an improved pedestrian airbag arrangement.

According to the present invention, there is provided a pedestrian airbag arrangement for a motor vehicle, the arrangement having: an airbag formed of flexible material defining an inflatable volume for the receipt of inflating gas and thus being configured for deployment into an inflated configuration; an elongate internal strap provided within the inflatable volume of the airbag; the internal strap being tethered to the material of the airbag and being connected to an actuator operable to pull the internal strap after said deployment of the airbag to thereby pull the material of the airbag inwardly of the inflated configuration; the arrangement being characterised in that said internal strap is tethered to the material of the airbag at a plurality of tether points including at least one sliding tether point at which the strap is tethered to the material of the airbag for sliding movement relative to the material.

Preferably, said tether points are spaced apart from one another in said inflated configuration of the airbag.

Conveniently, the airbag comprises a front panel and a rear panel and said strap follows a generally zig-zag path between said panels when the airbag is in said inflated configuration.

Conveniently, the or each said sliding tether point comprises a loop fixed to or integral with the material of the airbag, and wherein said strap passes through the loop for sliding movement relative to the loop.

Preferably, said plurality of tether points includes at least one fixed tether point at which the strap is fixedly connected to the material of the airbag.

Advantageously, an end of the strap is fixedly connected to the material of the airbag via a said fixed tether point.

Conveniently, an end of the strap is connected to the actuator.

Preferably, both ends of the internal strap are connected to the actuator, the strap being tethered to the material of the airbag by a plurality of said sliding tether points between said ends of the strap.

Advantageously, said internal strap is tethered to the material of the airbag at nine or more said tether points.

Conveniently, the arrangement further comprises a vent aperture formed through the material of the airbag, the vent aperture being initially closed by a removable seal to which a strap is tethered, said strap being connected to the actuator and the arrangement being configured such that operation of the actuator to pull the strap is effective to remove the seal from the vent aperture to thereby open the vent aperture.

Preferably, said strap tethered to the removable seal is said internal strap.

The internal strap may take any convenient form, providing it is elongate and flexible. The term "strap" used herein is therefore intended to encompass such alternative elongate flexible members such as, for example: wires, cords, tapes, bands, strings, lines, cables, belts, howsoever formed (such as, for example by being woven, or plaited etc.).

Preferably, the strap is formed of woven material.

Advantageously, the strap has a thickness of between 1 and 2 mm.

Conveniently, the strap is configured to extend in length by between 5% and 10% upon the application of a tensile load of 150N to the strap.

Preferably, the actuator is configured to pull the strap with a force of approximately 150N.

Advantageously, the actuator is positioned outside the inflatable volume of the airbag, and the strap passes from inside the inflatable volume to the actuator through a sealed opening formed in the material of the airbag.

Preferably, the arrangement comprises a housing within which the airbag is initially packed, and the actuator may optionally be provided either inside or outside the housing.

Conveniently, the arrangement comprises a plurality of said internal tether straps.

Preferably, the arrangement comprises a pair of said internal tether straps, both of which are connected to the same actuator.

Advantageously, the arrangement is provided on a motor vehicle, wherein the airbag is arranged for deployment into a position in which it lies across or against the windscreen of the vehicle, the arrangement being configured such that operation of the or each said actuator to pull the or each internal strap is effective to pull the airbag downwardly towards the bottom of the windscreen.

So that the invention may be more readily understood, and so that further features thereof may be appreciated, embodiments of the invention will now be described by way of example with reference to the accompanying drawings in which:
Figure 1 is a schematic illustration of a basic form of airbag suitable for use in an arrangement according to the present invention;
Figure 2 is a schematic illustration of the driver's side of the airbag of figure 1, showing an internal strap arrangement in accordance with the present invention;
Figure 3 is a schematic cross-sectional view through the airbag, showing the airbag in an inflated configuration in which it is deployed across the windscreen of a motor vehicle;
Figure 4 is a schematic cross-sectional view similar to that of figure 3, showing the airbag after operation of an actuator forming part of the present invention;
Figure 5 is a schematic illustration of the complete airbag, showing a similar internal strap arrangement on the passenger's side of the airbag;
Figure 6 is a schematic illustration of the driver's side of an airbag having an internal strap arrangement in accordance with a second embodiment of the present invention;
Figure 7 is similar view of an airbag having an internal strap arrangement in accordance with a third embodiment of the present invention;
Figure 8 is similar view of an airbag having an internal strap arrangement in accordance with a fourth embodiment of the present invention;
Figure 9 is similar view of an airbag having an internal strap arrangement in accordance with a fifth embodiment of the present invention;
Figure 10 is similar view of an airbag having an internal strap arrangement in accordance with a sixth embodiment of the present invention; and
Figure 11 is a schematic illustration of a complete airbag having an internal strap arrangement in accordance with a seventh embodiment of the present invention.

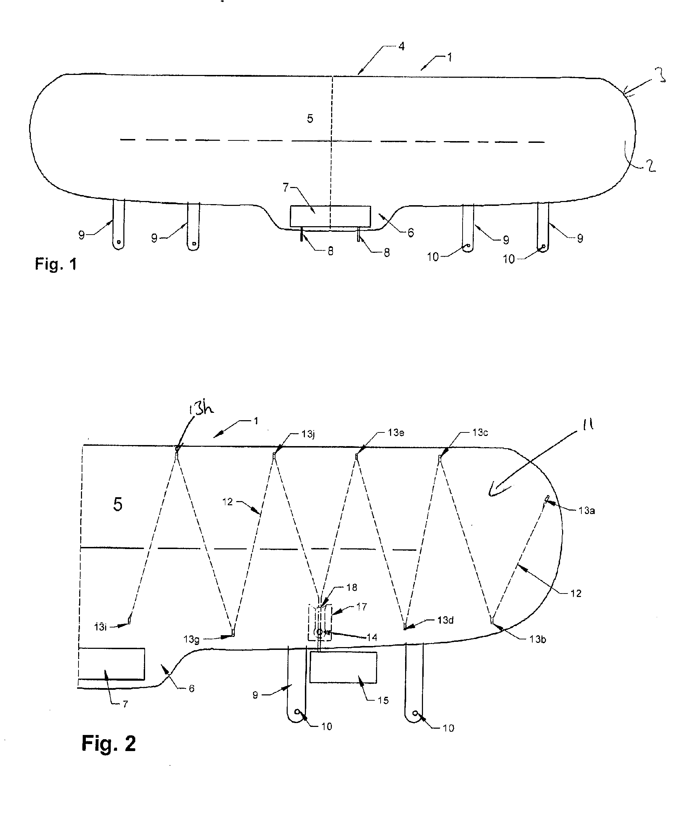

Referring initially to figure 1, there is shown an airbag 1 suitable for use in a pedestrian airbag arrangement in accordance with the present invention. The airbag 1 is illustrated as viewed from above and is shown in a basic form to clearly illustrate the general concept of the invention. However, as will be appreciated by those of skill in the art, other more complex airbag configurations may be used instead.

The airbag 1 may be formed from two substantially identical and generally rectangular sheets 2, 3 of flexible material, such as woven fabric, which are superimposed on one another and interconnected around their aligned edges by a peripheral seam 4 to define a front panel and a rear panel respectively with a large internal inflatable volume 5 therebetween for the receipt of inflating gas from an inflator such as a gas generator. The airbag is formed so as to have a neck region 6 within which an inflator such as a gas generator 7 can be provided in a known manner. In the particular arrangement illustrated, the gas generator 7 has a pair of outwardly directed mounting spigots 8, which preferably pass through respective mounting apertures formed in the neck region 6 of the airbag. The mounting spigots 8 are connected to the structure of the motor vehicle, preferably under the rear part of the vehicle's hood or bonnet, at a central position across the width of the vehicle, so as to clamp the fabric of the neck region 6 firmly between the gas generator 7 and the structure of the vehicle.

The pedestrian airbag illustrated is also provided with a plurality of stabilising tabs 9 which are spaced apart from one another along the lower edge of the peripheral seam 4. Each tab is provided with a mounting aperture 10 at its free end for connection to the structure of the motor vehicle beneath the rear part of the hood or bonnet of the vehicle. As will be appreciated by those of skill in the art, the stabilising tabs thus serve to stabilise the end regions of the of the airbag located to the sides of the windscreen of the vehicle when it is inflated upwardly across the windscreen from beneath the rear part of the vehicle's hood or bonnet, in a generally conventional manner.

As will be appreciated by those of skill in the art of airbag manufacture, although the airbag 1 has been described above as being formed from two separate sheets 2, 3 of flexible material, it is envisaged that in variants of the invention the airbag could be formed from a single sheet of flexible material, the sheet being folded in half to create two superimposed layers which can then be interconnected by a peripheral seam in an otherwise similar manner to that described above with reference to figure 1.

Turning now to consider Figure 2, there is shown an enlarged view of the driver's side of the passenger airbag 1 shown in figure 1. An internal strap arrangement 11 is also shown, which in this embodiment comprises a single elongate and flexible internal strap 12 provided within the inflatable volume of the airbag 5 and thus between the two sheets 2, 3 of flexible material forming the airbag. The internal strap 12 may take any convenient form, although preferred embodiments of the invention utilise a strap 12 of woven configuration. The woven strap is preferably configured so as to have a thickness in the range of 1 to 2 mm, and a maximum length extension in the range of 5 to 10% of original length when subjected to a tensile load of 150N.

A plurality of small loops 13 are provided on the inner surfaces of at least one of the sheets 2, 3 defining the inflatable volume of the airbag. The loops 13 may be formed of similar fabric to the airbag 1 and affixed to the inner surfaces of the sheets 2, 3 by stitching or other convenient means. Alternatively, in other embodiments it is proposed that the loops 13 will be formed integrally with the woven structure of the sheets 2, 3, such as, for example, from one or more of the individual yarns of the sheets.

As clearly illustrated in figure 2, with the airbag 1 laid out flat as shown, the internal strap 12 is threaded through the loops 13 so as to follow a generally "zig-zag" path across the driver's side region of the airbag. More particularly, it will be noted that one end of the strap 12 is looped through and anchored (for example by way of a knot or via stitching) to a loop 13a located adjacent the peripheral seam 4 of the airbag at the driver's side end of the airbag. This loop 13a thus defines a fixed tether point at which the end of the strap 12 is fixedly connected to the material of the airbag 1. From this fixed tether point 13a, the strap 12 is threaded through the next loop 13b which is located adjacent the peripheral seam 4 of the airbag along the lower edge of the airbag, whereafter the strap is then threaded through the next loop 13c which is located adjacent the peripheral seam along the upper edge of the airbag. The strap is then directed downwardly again towards the lower edge of the airbag where it is threaded through the next lower loop 13d and is then directed upwardly towards the next upper loop 13e.

From the upper loop 13e, the strap is directed downwardly and threaded through an opening 14 formed through one of the sheets of fabric 2, 3. In the arrangement illustrated, the opening 14 is formed through the upper sheet of fabric 2. As illustrated in figure 2, the opening 14 is located generally adjacent the lower edge of the airbag and spaced transversely inwardly of the neighbouring lower loop 13d.

The strap 12 is thus threaded through the opening 14 so as to pass from inside the inflatable volume 5 of the airbag to the outside of the airbag (as denoted by solid lines in figure 2). The region of the strap outside the inflatable volume of the airbag is then threaded through and operative part of an actuator 15 which is located outside the inflatable volume of the airbag. The actuator 15 and its function will be described in more detail below.

After passing into the actuator 15 for operative connection to the mechanism of the actuator, the strap 12 is then threaded back through the opening 16 in the upper sheet 2 and then through successive upper and lower loops 13f, 13g, 13h in a continuing zig-zag manner, and is then anchored at its other end to an inboard fixed tether point as defined by the loop 13i which is located generally adjacent the centrally positioned inflator 7. Again, the end of the strap is looped through and anchored to this loop 13i, for example via a knot or via stitching.

It is to be noted that although the invention is described with reference to the strap 12 being threaded through the various tether loops 13 after the loops have been fixed to the material of the airbag, it may be more convenient to manufacture airbags in accordance with the invention by threading the strap 12 through the tether loops 13 before the loops are fixed to the airbag material.

As will thus be appreciated, in the arrangement illustrated in figure 2, there are a total of nine loops 13, each of which serves to tether the strap 12 to the material of the airbag at a respective tether point. It is considered preferable for there to be a relatively large number of such loops 13 and hence respective tether points. At least 5 such loops/tether points are considered important to the proper operation of the invention. The tether points are all spaced apart from one another in the uninflated condition of the airbag illustrated. The tether points defined by the loops 13a, 13i to which the ends of the strap 12 are anchored represent fixed tether points, whilst the tether points defined by all of the other loops 13c-h represent sliding tether points due to the manner in which the strap passes through the loops 13c-h for sliding movement relative to the loops, and also relative to the material of the airbag 1.

It is proposed to mount the actuator 15 to the structure of the motor vehicle beneath the rear part of the hood or bonnet of the vehicle. In the particular arrangement illustrated, the actuator 15 is mounted between the two stabilising tabs 9. The actuator may either be located inside or outside the module or housing (not shown) initially containing the packaged airbag. The actuator is operable to pull the strap 12, and may comprise any convenient mechanism configured for this purpose. For example, it is envisaged that the actuator may comprise a rotatable drum on which the strap 12 is wound inside the actuator, the drum being rotated upon actuation of the actuator to wind in, and hence pull on the strap 12.

In order to permit sliding movement of the strap 12 through the opening 16 whilst limiting the escape of inflating gas through the opening, the opening 16 is substantially sealed. This can be achieved in a number of ways, but for the sake of simplicity the arrangement illustrated comprises a seal 17 which is affixed over the opening 16 to define a short channel 18 over the opening and through which the strap 12 extends between the seal 17 and the surface of the sheet 2.

The strap 12 is thus directed from the upper loop 13e, out from inside the inflatable volume 5 through the opening 16 formed in the upper sheet 2, along the channel 18, is connected to the actuator 15 outside the inflatable volume 5 and is then directed back through the channel 18, back through the opening 16 and into the inflatable volume 5 and then through the next upper loop 13f to continue its zig-zag path. When the airbag 1 is inflated, the pressure inside the inflatable volume will increase rapidly. This rapid rise in pressure presses the seal 17 and the surface of the upper sheet 2 together in the region of the opening 16, thereby sealing the opening and thus preventing, or at least limiting the escape of inflating gas through the opening 16, whilst still permitting sliding movement of the strap 12 through the opening.

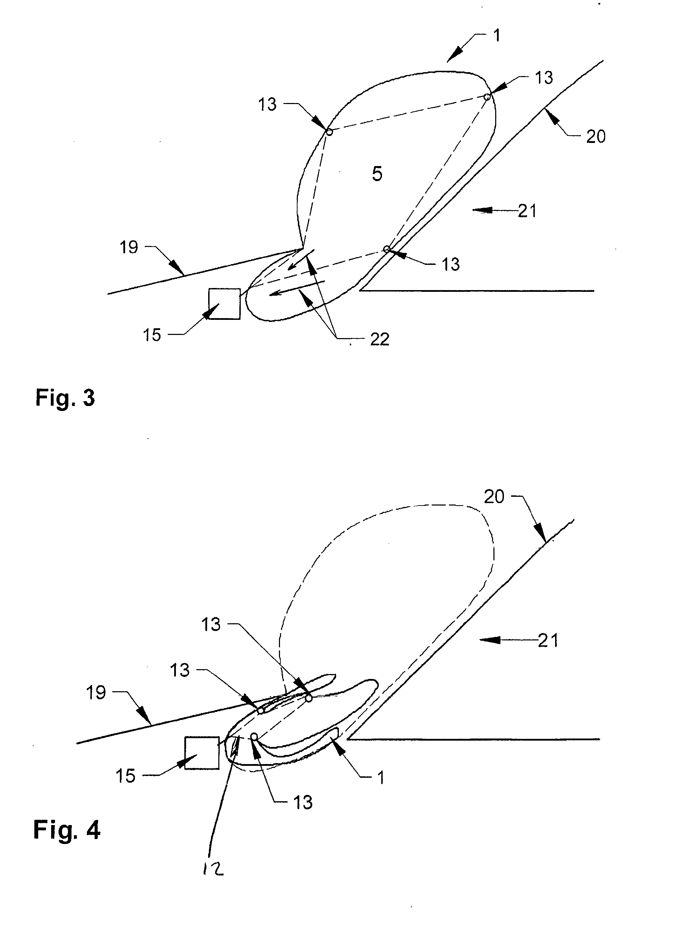

Operation of the airbag arrangement will now be described with reference to figures 3 and 4. Figure 3 shows the airbag 1 following deployment, for example in response to a signal from a crash sensor indicative of an actual or likely impact with the pedestrian. The airbag 1 is thus shown in its inflated configuration in which it extends upwardly from beneath the rear (raised) part of the vehicle's hood or bonnet 19 so as to extend across and against the windscreen 20 and adjacent A-pillars (not shown) in a known manner. This inflated configuration offers protection to the pedestrian from impact with the windscreen 20 and/or the A-pillars of the vehicle. However the inflated configuration obscures the driver's line of sight through the windscreen, as signified by arrow 21 in Figure 3.

It is important to note that in the inflated configuration of the airbag 1 illustrated in figure 3 the tether loops 13 are all spaced apart from one another, not only along the width of the airbag as illustrated in figure 2, but also across the inflated depth of the airbag 1.

After deployment of the airbag into its inflated configuration illustrated in figure 3, the actuator 15 is operated to pull downwardly on the internal strap 12 provided inside the airbag on the driver's side of the airbag. Operation of the actuator 15 can either occur after a short predetermined time period (of the order of a few seconds), or in response to a signal from an appropriate sensor indicative of there being no remaining risk to a pedestrian.

The actuator 15 pulls sharply (and preferably with a force in the region of 150N) on the mid section of the internal strap 12 where it passes outwardly from the inflatable volume 5 through the opening 16, as denoted by the arrows 22 in figure 3. As will be noted, the actuator is thus arranged to pull downwardly and forwardly on the strap 12. As the strap 12 is pulled by the actuator 15 in this manner, the strap slides through the loops 13c-h representing sliding tether points, whilst the ends of the strap 12 which are fixedly connected to the material of the airbag at the fixed tether points defined by loops 13a and 13i are drawn together. The actuator thus pulls on the strap in a manner which is effective to pull the material of the airbag 1 inwardly of its inflated condition (shown in phantom) as illustrated in figure 4. The airbag is thus pulled inwardly on itself and downwardly so as to become gathered at the base of the windscreen 20 as shown in figure 4 and thus out of the driver's line of sight 21 through the windscreen.

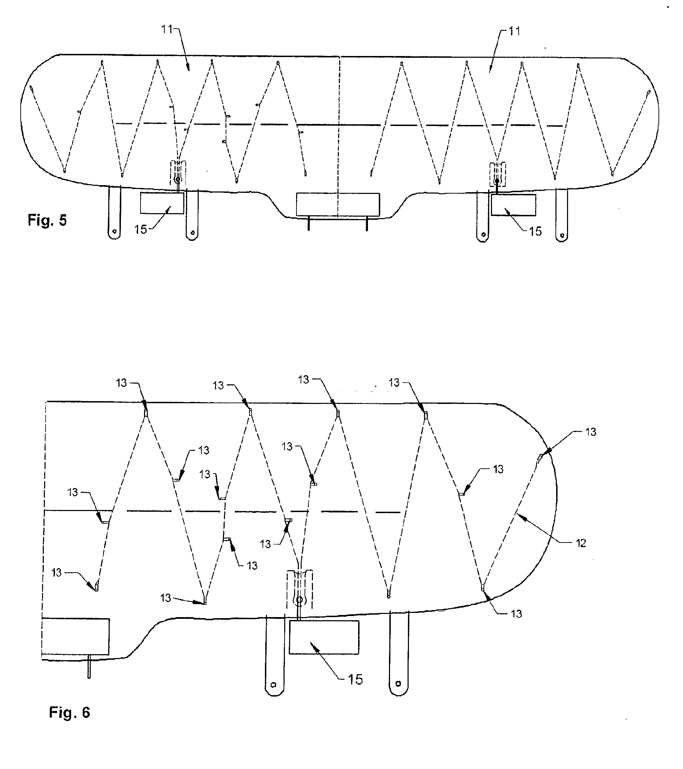

It is considered preferable to provide the internal strap arrangement 11 only on the driver's side of the airbag 1 as shown in figure 2. This is so that when the arrangement is actuated as proposed above, only the driver's side the airbag is pulled inwardly, leaving the passenger's side substantially fully inflated. Nevertheless, as illustrated in figure 5, other embodiments of the invention may also include a similar internal tether arrangement 11 on the passenger side of the airbag 1. In the arrangement shown in figure 5, each side of the airbag has a substantially identical internal strap arrangement 11 of the same configuration as described above in detail. However, it is to be noted that a possible drawback of the double-sided arrangement of figure 5 is that upon actuation of the two actuators 15, both sides of the airbag will be pulled inwardly on themselves, which will cause a much greater reduction in volume and hence a much greater increase in internal pressure than in the case of the driver's-side-only arrangement of figure 2.

Figure 6 illustrates an alternative internal strap arrangement 11 which is based closely on the arrangement described in detail above and as shown in figure 2. However, in the arrangement of figure 6, additional tether loops 13 are provided along the path of the strap. In all other respects, the arrangement of figure 6 is generally identical to that of figure 2. As will be appreciated, through adjustment of the positions and number of the tether loops 13, the pulling characteristics of the internal strap arrangement 11 can be varied and thus finetuned to particular vehicle types or models.

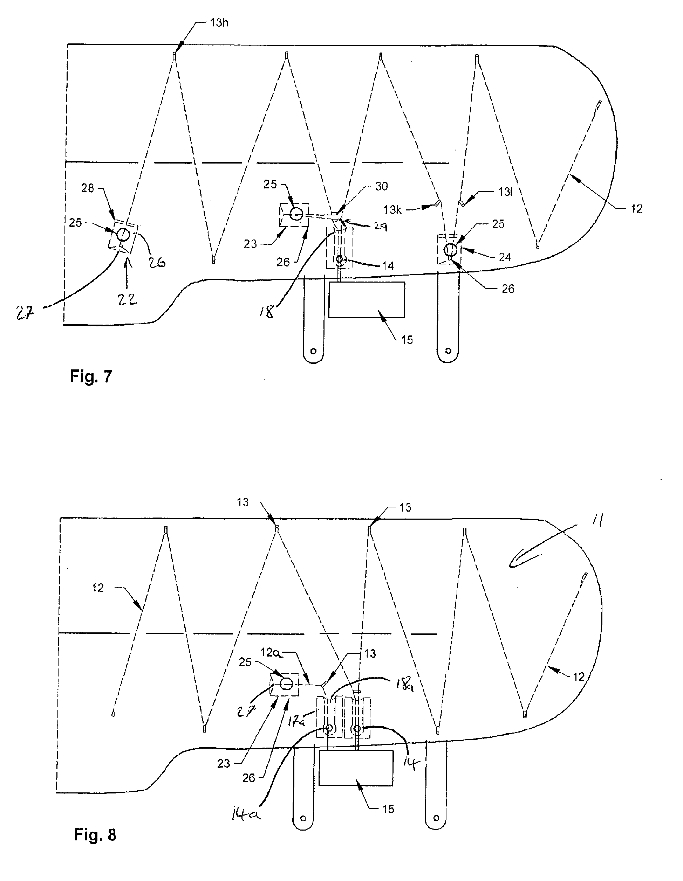

Figure 7 illustrates another alternative internal strap arrangement based closely on the arrangement of figure 2. In the arrangement of figure 7, however, the airbag is provided with a number of vents 22, 23, 24 which are initially closed but each of which is opened by the strap 12 when the strap is pulled by the actuator 15. Each of the vents 22, 23, 24 shown in figure 7 has a slightly different configuration as will be described below, and it is to be appreciated the airbag 1 does not necessarily have to include all three types of vent. Indeed it is envisaged that in practice only a single type of vent 22, 23, 24 is likely to be provided

The first configuration of vent 22 is shown provided at one end of the strap 12 and comprises a vent aperture 25 formed through the material of the one of the sheets 2, 3 defining the airbag. The vent aperture 25 is initially closed by a removable seal 26 provided over the vent aperture 25 in the manner of a patch. The seal 26 is removably fixed to the surface of the airbag material around the vent aperture 25, for example by stitching in the form of a peripheral tear seam or by the use of a suitable adhesive. The end of the strap 12 is connected to the seal 26, preferably at a position 27 which is located on the opposite side of the vent aperture 25 to the first tether loop 13h through which the strap 12 passes from the end. The strap 12 thus extends over the vent aperture 25 as shown.

When the strap 12 is pulled as described above by the actuator 15, it is thus arranged to peel or otherwise pull the seal 26 away from the material of the airbag, thereby opening up the vent aperture 25 to permit the flow of inflating gas outwardly from the inflatable volume 5 of the airbag as the airbag is gathered inwardly on itself. The vent 22 is thus openable in direct response to actuation of the actuator to assist in relieving the internal pressure inside the airbag, thereby reducing the tension applied to the strap 12 as it is pulled.

The seal 26 is preferably fixedly secured to the material of the airbag along the edge 28 opposite to the point of connection of the strap 12. By fixedly securing the seal in this manner, the seal 26 can be pulled from the aperture 25 as described above, but then remains secured to the material of the airbag, and thus continues to anchor the end of the strap 12 to the airbag.

The second configuration of vent 23 again comprises a vent aperture 25 and a removable seal 26 in a generally identical configuration to the first vent 22. However, in this vent arrangement the strap 12 follows a slight detour from the zig-zag path which it follows between the sliding tether loops 13 inside the airbag in order to connect to the seal 26. Two additional tether rings 29, 30 are provided and are attached to the inside surface of one of the two sheets 2, 3 at adjacent positions in the vicinity of the sealing channel 18 provided over the opening 16. The strap 12 is threaded through the first of these two additional tether rings 29 immediately after exiting the channel 18 following re-entry into the inflatable volume 5 of the airbag from the actuator 15. The strap is then turned through a relatively sharp angle and extends across the vent aperture 25, after which it is connected to the seal 26. The strap is then directed from its connection 27 to the seal 26 through the second additional tether ring 30 to continue its zig-zag path inside the airbag.

Upon actuation of the actuator 15, the strap 12 is pulled sharply as described above. Because the vent 23 is located proximate to the actuator 15, the vent is thus immediately opened in a similar peeling manner to that described above in connection with the first vent 22. As will thus be appreciated, because the second vent 23 is located much closer to the actuator 15 along the length of the strap 12 than the first vent 22, the second vent 23 will be opened more quickly than the first vent 22. It is considered important to arrange the vent for early opening upon actuation of the actuator in order to permit venting of the inflatable volume as soon as possible after actuation so as to reduce the tension applied to the tether. The second vent 23, being the closest to the actuator 15, is thus shown in the favoured vent position.

The third vent 24 also comprises a vent aperture 25 and a removable seal 26 in a generally identical configuration to the first vent 22. In this arrangement, the strap 12 is threaded through a loop or aperture formed on the seal 26. A pair of tether loops 13k, 131 are fixed to the material of the airbag directly opposite the loop or aperture of the seal 26 to thus direct the pulling force of the strap 12 across the vent aperture 25 when the strap is pulled by the actuator.

Figure 8 illustrates an internal strap arrangement 11 comprising another alternative vent configuration, which can be considered to represent a modification of the second vent 23 illustrated in figure 7. The same reference numbers are therefore used to denote identical or comparable integers of the arrangement. As will be noted, in this arrangement, the vent 23 is connected (at 27) to the end of a relatively short secondary strap 12a. The secondary strap 12a is directed from its point of connection 27 to the seal patch 26, across the vent aperture 25 and then through a tether loop 30. A secondary opening 14a is provided through one of the two sheets 2, 3 defining the airbag, the opening 14a again being sealed by the creation of a channel 18a between an overlying seal 17a and the surface of the sheet. As will be noted, the secondary strap 12a is directed outwardly from the inflatable volume of the airbag through the secondary opening 14a and is operatively connected to the external actuator 15. The main strap 12 thus follows a zig-zag path though the various tether loops 13 without a detour for connection to the vent seal 26 as in the case of the arrangement shown in figure 7.

The actuator may be configured either to pull the secondary strap 12a to open the vent 23 at the same instant that it pulls the main strap 12 to begin inward collapse of the airbag , or can be configured to pull the secondary strap 12a shortly before, or even shortly after it begins to pull the main strap 12.

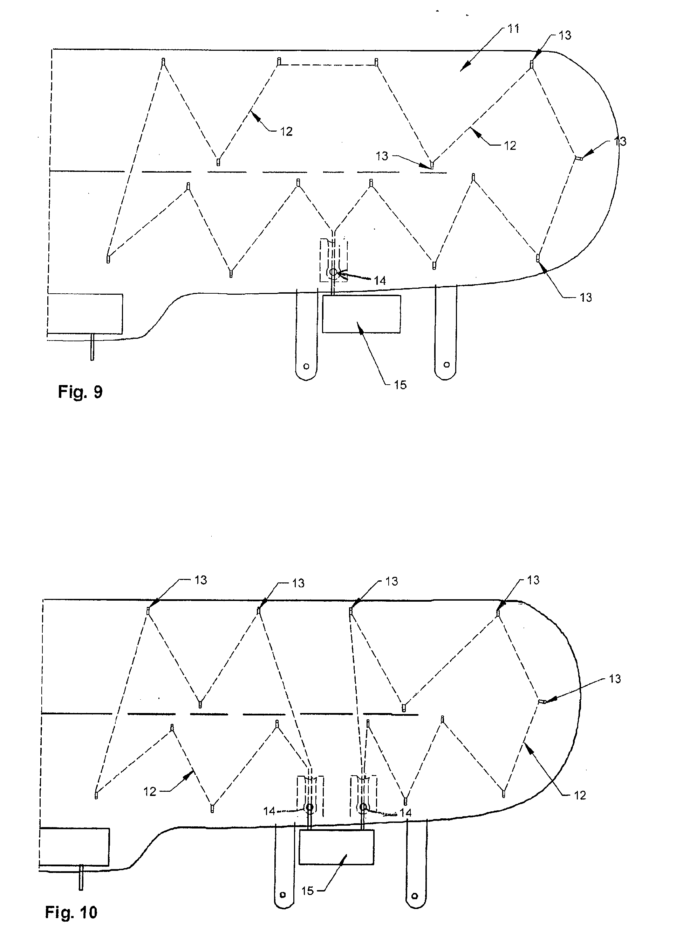

Figure 9 shows another alternative internal strap arrangement 11. In this arrangement, the two ends of the strap 12 are both threaded through the sealed opening 14 formed in the material of the airbag and are both connected to the actuator 15. As illustrated, the strap 12 thus follows a closed path inside the airbag, passing through a plurality of spaced apart tether loops 13, each of which defines a sliding tether point. In this arrangement there are therefore no fixed tether points at which the strap 12 is fixedly connected to the material of the airbag. Upon actuation, both ends of the strap 12 are pulled together by the actuator 15, and the closed path of the strap inside the airbag thus becomes shortened, thereby gathering up the airbag and pulling it inwardly and downwardly.

In the arrangement of figure 10, the internal strap arrangement 11 on the driver's side of the airbag comprises a pair of straps 12. Each strap 12 is threaded through a plurality of spaced apart tether loops 13 defining respective sliding tether points, and is connected via both its ends to the same, shared, actuator 15, in an identical manner to that described above in connection with figure 9. The actuator 15 may be operated so as to pull on both tethers 12 simultaneously or alternatively can be configured to pull on the straps 12 in succession.

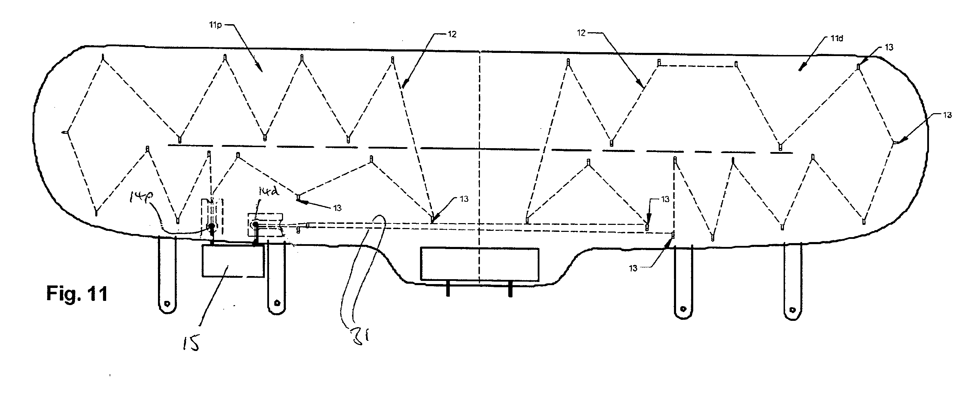

Figure 11 shows another alternative arrangement which comprises a pair of internal straps 12. However, in this arrangement, rather than both straps being provided on the driver's side of the airbag as shown in figure 9, they are each provided on opposite sides of the airbag. More particularly, the arrangement comprises a pair of internal strap arrangements, namely a passenger side arrangement 11 p and a driver's side arrangement 11 d. The passenger's side strap arrangement has a generally identical configuration to the strap arrangement described above in connection with figure 9 and is thus configured such that both ends of the strap 12 pass through the same outlet aperture 14p in the airbag and are both connected to the same actuator 15. The driver's side arrangement 11d is also generally similar but has a somewhat longer strap configured such that its two end regions 31 each pass along the bottom of the airbag from the driver's side to the passengers side where they pass through a second opening 14d in the airbag and are connected to the same actuator 15 on the passenger side of the airbag. The actuator 15 can be configured to pull both straps 12 simultaneously, or can be configured to pull the straps selectively in dependence on signals from a sensor arrangement, or can be configured to pull the straps 12 in succession.

## Claims

1. A pedestrian airbag arrangement for a motor vehicle, the arrangement having: an airbag (1) formed of flexible material defining an inflatable volume (5) for the receipt of inflating gas and thus being configured for deployment into an inflated configuration; an elongate internal strap (12) provided within the inflatable volume (5) of the airbag; the internal strap (12) being tethered to the material of the airbag and being connected to an actuator (15) operable to pull the internal strap (12) after said deployment of the airbag to thereby pull the material of the airbag inwardly of the inflated configuration; the arrangement being **characterised in that** said internal strap (12) is tethered to the material of the airbag at a plurality of tether points (13) including at least one sliding tether point (13b-h) at which the strap (12) is tethered to the material of the airbag for sliding movement relative to the material.

2. A pedestrian airbag arrangement according to claim 1, wherein said tether points (13) are spaced apart from one another in said inflated configuration of the airbag.

3. A pedestrian airbag arrangement according to claim 1 or claim 2, wherein said airbag comprises a front panel (2) and a rear panel (3) and strap follows a generally zig-zag path between said panels (2, 3) when the airbag is in said inflated configuration.

4. A pedestrian airbag arrangement according to any preceding claim, wherein the or each said sliding tether point comprises a loop (13b-h) fixed to or integral with the material of the airbag, and wherein said strap (12) passes through the loop for sliding movement relative to the loop.

5. A pedestrian airbag arrangement according to any preceding claim, wherein said plurality of tether points includes at least one fixed tether point (13a, b) at which the strap (12) is fixedly connected to the material of the airbag.

6. A pedestrian airbag arrangement according to claim 5, wherein an end of the strap (12) is fixedly connected to the material of the airbag via a said fixed tether point (13a,b).

7. A pedestrian airbag arrangement according to any preceding claim, wherein an end of the strap (12) is connected to the actuator (15).

8. A pedestrian airbag arrangement according to any preceding claim, wherein both ends of the internal strap (12) are connected to the actuator (15), the strap (12) being tethered to the material of the airbag by a plurality of said sliding tether points (13b-h) between said ends of the strap (12).

9. A pedestrian airbag arrangement according to any preceding claim, wherein said internal strap (12) is tethered to the material of the airbag at five or more said tether points (13).

10. A pedestrian airbag arrangement according to any preceding claim, further comprising a vent aperture (25) formed through the material of the airbag, the vent aperture being initially closed by a removable seal (26) to which a strap (12, 12a) is tethered, said strap being connected to the actuator (15) and the arrangement being configured such that operation of the actuator (15) to pull the strap (12, 12a) is effective to remove the seal (26) from the vent aperture (25) to thereby open the vent aperture.

11. A pedestrian airbag arrangement according to claim 10, wherein said strap tethered to the removable seal (26) is said internal strap (12).

12. A pedestrian airbag arrangement according to any preceding claim, wherein the actuator (15) is positioned outside the inflatable volume (5) of the airbag, and the strap (12) passes from inside the inflatable volume to the actuator (15) through a sealed opening (14) formed in the material of the airbag.

13. A pedestrian airbag arrangement according to any preceding claim, the arrangement comprising a plurality of said internal tether straps (12).

14. A pedestrian airbag arrangement according to claim 13 comprising a pair of said internal tether straps (12), both of which are connected to the same actuator (15).

15. A pedestrian airbag arrangement according to any preceding claim provided on a motor vehicle, wherein the airbag (1) is arranged for deployment into a position in which it lies across or against the windscreen (20) of the vehicle, the arrangement being configured such that operation of the or each said actuator (15) to pull the or each internal strap (12) is effective to pull the airbag downwardly towards the bottom of the windscreen (20).

## Patentansprüche

1. Fußgänger-Airbaganordnung für ein Kraftfahrzeug, wobei die Anordnung Folgendes aufweist: einen Airbag (1), der aus flexiblem Material geformt ist, das ein füllbares Volumen (5) zur Aufnahme von Füllgas definiert und somit zum Entfalten zu einer gefüllten Gestalt eingerichtet ist; ein langgezogenes Innenband (12), das in dem füllbaren Volumen (5) des Airbags vorgesehen ist; wobei das Innenband (12) an dem Material des Airbags gehalten ist und mit einem Stellglied (15) verbunden ist, das so einsetzbar ist, dass es an dem Innenband (12) nach dem Entfalten des Airbags zieht, um dadurch das Material des Airbags gegenüber der gefüllten Gestalt nach innen zu ziehen; wobei die Anordnung **dadurch gekennzeichnet ist, dass** das Innenband (12) an dem Material des Airbags an einer Vielzahl von Haltepunkten (13) einschließlich mindestens eines Gleithaltepunkts (13b-h) gehalten ist, an dem das Band (12) an dem Material des Airbags gehalten ist, um sich bezogen auf das Material gleitend zu bewegen.

2. Fußgänger-Airbaganordnung nach Anspruch 1, wobei die Haltepunkte (13) bei der gefüllten Gestalt des Airbags voneinander beabstandet sind.

3. Fußgänger-Airbaganordnung nach Anspruch 1 oder Anspruch 2, wobei der Airbag eine vordere Bahn (2) und eine hintere Bahn (3) umfasst und das Band im Allgemeinen zickzackförmig zwischen den Bahnen (2, 3) verläuft, wenn sich der Airbag die gefüllte Gestalt einnimmt.

4. Fußgänger-Airbaganordnung nach einem vorhergehenden Anspruch, wobei der oder jeder Gleithaltepunkt eine Schlaufe (13b-h) umfasst, die an dem Material des Airbags befestigt oder einteilig damit ausgebildet ist, und wobei das Band (12) durch die Schlaufe läuft, um sich bezogen auf die Schlaufe gleitend zu bewegen.

5. Fußgänger-Airbaganordnung nach einem vorhergehenden Anspruch, wobei die Vielzahl von Haltepunkten mindestens einen festen Haltepunkt (13a, b) aufweist, an dem das Band (12) fest mit dem Material des Airbags verbunden ist.

6. Fußgänger-Airbaganordnung nach Anspruch 5, wobei ein Ende des Bands (12) fest mit dem Material des Airbags über einen solchen festen Haltepunkt (13a, b) verbunden ist.

7. Fußgänger-Airbaganordnung nach einem vorhergehenden Anspruch, wobei ein Ende des Bands (12) mit dem Stellglied (15) verbunden ist.

8. Fußgänger-Airbaganordnung nach einem vorhergehenden Anspruch, wobei beide Enden des Innenbands (12) mit dem Stellglied (15) verbunden sind, wobei das Band (12) an dem Material des Airbags über eine Vielzahl der Gleithaltepunkte (13b-h) zwischen den Enden des Bands (12) gehalten ist.

9. Fußgänger-Airbaganordnung nach einem vorhergehenden Anspruch, wobei das Innenband (12) an dem Material des Airbags an fünf oder mehr der Haltepunkte (13) gehalten ist.

10. Fußgänger-Airbaganordnung nach einem vorhergehenden Anspruch, die ferner eine durch das Material des Airbags hindurch ausgebildete Gasöffnung (25) umfasst, wobei die Gasöffnung zu Beginn durch einen entfernbaren Verschluss (26) verschlossen ist, an dem ein Band (12, 12a) gehalten ist, wobei das Band mit dem Stellglied (15) verbunden ist und die Anordnung derart eingerichtet ist, dass die Betätigung des Stellglieds (15) zum Ziehen an dem Band (12, 12a) bewirkt, dass der Verschluss (26) von der Gasöffnung (25) entfernt wird, um dadurch die Gasöffnung zu öffnen.

11. Fußgänger-Airbaganordnung nach Anspruch 10, wobei es sich bei dem Band, das an dem entfernbaren Verschluss (26) gehalten ist, um das Innenband (12) handelt.

12. Fußgänger-Airbaganordnung nach einem vorhergehenden Anspruch, wobei das Stellglied (15) außerhalb des füllbaren Volumens (5) des Airbags platziert ist, und das Band (12) von innerhalb des füllbaren Volumens zu dem Stellglied (15) durch eine verschlossene Öffnung (14) verläuft, die in dem Material des Airbags ausgebildet ist.

13. Fußgänger-Airbaganordnung nach einem vorhergehenden Anspruch, wobei die Anordnung eine Vielzahl der inneren Haltebänder (12) umfasst.

14. Fußgänger-Airbaganordnung nach Anspruch 13, die ein Paar der inneren Haltebänder (12) umfasst, von denen beide mit demselben Stellglied (15) verbunden sind.

15. Fußgänger-Airbaganordnung nach einem vorhergehenden Anspruch, die an einem Kraftfahrzeug vorgesehen ist, wobei der Airbag (1) für die Entfaltung in eine Position angeordnet ist, in der er quer über oder an der Windschutzscheibe (20) des Fahrzeugs liegt, wobei die Anordnung so eingerichtet ist, dass die Betätigung des oder jedes Stellglieds (15) zum Ziehen an dem oder jedem Innenband (12) bewirkt, dass der Airbag nach unten in Richtung des unteren Bereichs der Windschutzscheibe (20) gezogen wird.

## Revendications

1. Agencement d'airbag pour piéton destiné à un véhicule automobile, l'agencement comprenant : un airbag (1) constitué de matériau flexible délimitant un volume gonflable (5) pour la réception de gaz de gonflage et étant ainsi configuré pour le déploiement en une configuration gonflée ; une sangle intérieure (12) allongée située dans le volume gonflable (5) de l'airbag ; la sangle intérieure (12) étant attachée au matériau de l'airbag et étant reliée à un actionneur (15) pouvant être mis en oeuvre pour tirer sur la sangle intérieure (12) après ledit déploiement de l'airbag pour tirer ainsi le matériau de l'airbag vers l'intérieur de la configuration gonflée ; l'agencement étant **caractérisé en ce que** ladite sangle intérieure (12) est attachée au matériau de l'airbag par une pluralité de points d'attache (13) incluant au moins un point d'attache de coulissement (13b-h) par lequel la sangle (12) est attachée au matériau de l'airbag pour un mouvement coulissant par rapport au matériau.

2. Agencement d'airbag pour piéton selon la revendication 1, dans lequel lesdits points d'attache (13) sont espacés les uns des autres dans ladite configuration gonflée de l'airbag.

3. Agencement d'airbag pour piéton selon la revendication 1 ou la revendication 2, dans lequel ledit airbag comprend un panneau avant (2) et un panneau arrière (3) et la sangle suit une trajectoire globalement en zigzag entre lesdits panneaux (2, 3) quand l'airbag est dans ladite configuration gonflée.

4. Agencement d'airbag pour piéton selon une quelconque revendication précédente, dans lequel le ou chaque dit point d'attache de coulissement comprend un anneau (13b-h) fixé au matériau de l'airbag ou réalisé d'un seul tenant avec celui-ci, et ladite sangle (12) passant à travers l'anneau pour un mouvement coulissant par rapport à l'anneau.

5. Agencement d'airbag pour piéton selon une quelconque revendication précédente, dans lequel ladite pluralité de points d'attache comporte au moins un point d'attache fixe (13a, b) par lequel la sangle (12) est reliée de manière fixe au matériau de l'airbag.

6. Agencement d'airbag pour piéton selon la revendication 5, dans lequel une extrémité de la sangle (12) est reliée de manière fixe au matériau de l'airbag par un desdits points d'attache fixes (13a, b).

7. Agencement d'airbag pour piéton selon une quelconque revendication précédente, dans lequel une extrémité de la sangle (12) est reliée à l'actionneur (15).

8. Agencement d'airbag pour piéton selon une quelconque revendication précédente, dans lequel les deux extrémités de la sangle intérieure (12) sont reliées à l'actionneur (15), la sangle (12) étant attachée au matériau de l'airbag par une pluralité desdits points d'attache de coulissement (13b-h) entre lesdites extrémités de la sangle (12).

9. Agencement d'airbag pour piéton selon une quelconque revendication précédente, dans lequel ladite sangle intérieure (12) est attachée au matériau de l'airbag par cinq dits points d'attache (13) ou plus.

10. Agencement d'airbag pour piéton selon une quelconque revendication précédente, comprenant en outre un orifice d'évent (25) formé à travers le matériau de l'airbag, l'orifice d'évent étant initialement fermé par un élément obturateur amovible (26) auquel une sangle (12, 12a) est attachée, ladite sangle étant reliée à l'actionneur (15) et l'agencement étant configuré de sorte que la mise en oeuvre de l'actionneur (15) pour tirer sur la sangle (12, 12a) est efficace pour retirer l'élément obturateur (26) de l'orifice d'évent (25) pour ouvrir ainsi l'orifice d'évent.

11. Agencement d'airbag pour piéton selon la revendication 10, dans lequel ladite sangle attachée à l'élément obturateur amovible (26) est ladite sangle intérieure (12).

12. Agencement d'airbag pour piéton selon une quelconque revendication précédente, dans lequel l'actionneur (15) est positionné à l'extérieur du volume gonflable (5) de l'airbag, et la sangle (12) passe de l'intérieur du volume gonflable à l'actionneur (15) à travers un orifice obturé (14) formé dans le matériau de l'airbag.

13. Agencement d'airbag pour piéton selon une quelconque revendication précédente, l'agencement comprenant une pluralité desdites sangles d'attache intérieures (12).

14. Agencement d'airbag pour piéton selon la revendication 13, comprenant une paire desdites sangles d'attache intérieures (12), qui sont toutes les deux reliées au même actionneur (15).

15. Agencement d'airbag pour piéton selon une quelconque revendication précédente situé sur un véhicule automobile, dans lequel l'airbag (1) est agencé pour le déploiement dans une position dans laquelle il est étendu en travers ou contre le pare-brise (20) du véhicule, l'agencement étant configuré de sorte que la mise en oeuvre du ou de chaque dit actionneur (15) pour tirer sur la ou chaque sangle intérieure (12) est efficace pour tirer l'airbag vers le bas en direction de la partie inférieure du pare-brise (20).
